Europäisches Patentamt

European Patent Office

Office européen des brevets

(19)

(11) **EP 0 719 434 B1**

(12) **EUROPÄISCHE PATENTSCHRIFT**

| | |
|---|---|
| (45) Veröffentlichungstag und Bekanntmachung des Hinweises auf die Patenterteilung:<br>**23.07.1997 Patentblatt 1997/30** | (51) Int Cl.6: **G06K 15/12**, G02B 26/10 |
| (21) Anmeldenummer: **94926774.4** | (86) Internationale Anmeldenummer:<br>**PCT/DE94/01047** |
| (22) Anmeldetag: **13.09.1994** | (87) Internationale Veröffentlichungsnummer:<br>**WO 95/08160 (23.03.1995 Gazette 1995/13)** |

(54) **ANORDNUNG ZUR ERZEUGUNG EINES RASTERBILDES AUF EINEM LICHTEMPFINDLICHEN AUFZEICHUNUNGSTRÄGER**

ARRANGEMENT FOR GENERATING A MATRIX IMAGE ON A PHOTOSENSITIVE RECORDING MEDIUM

SYSTEME DE GENERATION D'UNE IMAGE MATRICIELLE SUR UN SUPPORT D'ENREGISTREMENT PHOTOSENSIBLE

| | |
|---|---|
| (84) Benannte Vertragsstaaten:<br>**BE DE FR GB NL** | (72) Erfinder: **GOLDMANN, Gerd**<br>**D-81739 München (DE)** |
| (30) Priorität: **15.09.1993 DE 4331360** | (74) Vertreter: **Schaumburg, Thoenes & Thurn**<br>**Mauerkircherstrasse 31**<br>**81679 München (DE)** |
| (43) Veröffentlichungstag der Anmeldung:<br>**03.07.1996 Patentblatt 1996/27** | |
| (73) Patentinhaber: **Océ Printing Systems GmbH**<br>**85586 Poing (DE)** | (56) Entgegenhaltungen:<br>EP-A- 0 521 491    EP-A- 0 544 002<br>WO-A-94/18802    DE-A- 3 034 055 |

## Beschreibung

Die Erfindung betrifft eine Anordnung zur Erzeugung eines aus einzelnen Bildpunkten zusammengesetzten Rasterbildes auf einem lichtempfindlichen Aufzeichnungsträger gemäß dem Oberbegriff des Patentanspruches 1.

Eine derartige Anordnung ist aus der EP-A1-05 44 002 bekannt. Die bekannte Anordnung enthält ein Laserdiodenarray sowie eine Abbildungsoptik mit deren Hilfe ein aus einzelnen Bildpunkten zusammengesetztes Rasterbild auf einem lichtempfindlichen Träger erzeugt wird.

Beim elektrofotografischen Drucken geschieht die Zeichenerzeugung bisher entweder über ein Laser-Scan-Modul oder durch LED-Zeilen. Letztere sind aus aufbautechnischen Kostengründen auf Auflösungen bis ca. 600 dpi (dots per inch) begrenzt. Bei Laser-Scan-Modulen sind zwar heute schon Auflösungen >600 dpi realisiert worden, z. B. für Filmbelichter, jedoch nur bei ralativ geringen Prozeßgeschwindigkeiten. Begrenzend wirkt sich hier die erforderliche Drehzahl des Polygon-Spiegels bzw. dessen Antriebsmotors aus, die bei Auflösungen über 600 dpi und Prozeßgeschwindigkeiten über 0,5 m/s weit über den heute technisch realisierbaren Drehzahlen bis zu 100 000 U/min, bzw. wirtschaftlich sinnvollen von ca. 14 000 U/min liegen müßte.

Die Drehzahl des Polygon-Spiegels berechnet sich zu

$$f_{pol} = \frac{u \cdot 60}{R \cdot Z \cdot M} \ \text{(U/min)}$$

mit

| | |
|---|---|
| $f_{pol}$ | Drehzahl Polygon-Spiegel |
| u | Prozeßgeschwindigkeit |
| 1/R | Auflösung |
| Z | Zahl der Teilstrahlen |
| M | Zahl der Fläche/Polygonspiegel |

Beispiel: M = 10, Z = 1, u = 1 m/s, 1/R = 1200 dpi, hierbei ergibt sich eine Drehzahl von ca. 286 000 U/min.

Zur Vermeidung hoher Drehzahlen wurde versucht, mit mehreren Teilstrahlen parallel zu arbeiten. So wurde bei Verwendung eines Gaslasers (HeNe-Laser oder Ar-Laser) ein akusto-optischer Ablenker verwendet, der es gestattet, mehrere Teilstrahlen unabhängig voneinander zu erzeugen (typischerweise bis ca. 10). Ein solches Verfahren ist technisch sehr aufwendig und damit auch kostenintensiv, außerdem reicht bei sehr hohen Anforderungen an die Auflösung und Prozeßgeschwindigkeit die so erzielbare Anzahl von Teilstrahlen immer noch nicht aus.

Laser mit Laser-Scan-Modulen enthalten neben der aus einem Polygon-Drehspiegel bestehenden Ablenkeinheit eine Scan-Optik. Diese besteht im allgemeinen aus einer Kollimationsoptik, die den von der Strahlungsquelle austretenden Laserstrahl formt und auf den notwendigen Durchmesser aufweitet, sowie einem dem Polygon-Drehspiegel nachgeordneten Linsensystem mit fΘ Charakteristik, das in erster Linie dazu dient, den auftretenden Pyramidalfehler zu korrigieren. Dieses Linsensystem hat keine abbildenden Eigenschaften, da bei Laserstrahldruckern die Strahlungsquelle nicht abgebildet wird, sondern die Laserstrahlen allein ein Mittel sind, um gesteuert z. B. über den akustooptischen Ablenker auf dem Aufzeichnungsträger ein Bildmuster zu erzeugen, wobei der Laserstrahler auf dem Weg von der Laserquelle zum Ziel, nämlich dem Aufzeichnungsträger Verzerrungen unterliegt. Bei konventionellen Laserdruckern findet eine Generierung des Zeichenbildes unter Verwendung der bekannten Ablenkmittel eigentlich erst auf dem Fotoleiter statt, im Unterschied z. B. zu Kopiergeräten, bei denen die Vorlage mit Hilfe einer Optik möglichst verzerrungsfrei auf dem Fotoleiter abgebildet wird.

Aus der US-A-4,404,571 ist ein Laserscanner zur Erzeugung eines Rasterbildes aus einzelnen Bildpunkten auf einer lichtempfindlichen Bildtrommel eines Druckers bekannt, welcher ein Laserdiodenarray mit einer Mehrzahl von einzeln erregbaren Laserdioden sowie einen Polygondrehspiegel, der die Laserstrahlen über die Oberfläche der Bildtrommel führt, aufweist. Im optischen Weg zwischen Laserdiodenarray und Bildtrommel ist eine Optik mit einer Kollimatorlinse und einer fΘ Linse angeordnet. Sie dient zur Fokussierung der Laserstrahlen.

Zur Erzeugung von Zeichen auf einem Aufzeichnungsmedium durch thermische Veränderung von dessen Oberfläche ist es weiterhin aus der EP-A3-0 363 347 bekannt, ein Laserdiodenarray zu verwenden. Dieses Laserdiodenarray weist mehrere Laserdioden auf, die zur Bildung eines einzigen gemeinsamen Lichtstrahles mit hoher Intensität phasenverschoben angesteuert werden. Ziel ist es dabei, einen einzigen Lichtstrahl mit einer gleichmäßigen Intensitätsverteilung im Querschnittsbereich zu erzeugen und die Intensität des Gesamtstrahles so zu erhöhen, daß das Aufzeichnungsmedium bleibend thermisch verändert wird. Die in der bekannten Anordnung verwendete Optik dient zur Fokussierung des Sammelstrahles.

Elektrografische Hochleistungs-Druckeinrichtungen sind üblicherweise in Abhängigkeit vom Anwendungsgebiet für eine Zeichenerzeugung mit einer spezifischen Auflösung ausgelegt. Eine Umschaltung zwischen der Zeichenerzeugung mit hoher Auflösung und niederer Auflösung, z. B. beim Wechsel zwischen Entwurfsdruck und Schreibschriftdruck ist zwar z. B. bei Tischlaserdruckern üblich, dies geschieht jedoch im Rahmen der Software des Zeichengenerators, d. h. es werden Zeichenfonts mit unterschiedlicher Auflösung geladen, wobei die hardwaremäßige Zeichenerzeugung üblicherweise unberührt bleibt.

Sollten unterschiedliche Auflösungen mit elektrografischen Hochleistungsdruckern erzeugt werden, so war es bisher üblich, mehrere Zeichengeneratoren mit unterschiedlichem Auflösungsgrad im Drucker anzuordnen.

Aufgabe der Erfindung ist es deshalb, eine Anordnung gemäß dem Oberbegriff des Patentanspruchs 1 so auszugestalten, daß allein durch elektrische Ansteuerung bei der Bilderzeugung die Auflösung des Rasterbildes verändert werden kann.

Diese Aufgabe wird gemäß den Merkmalen des Patentanspruches 1 gelöst. Vorteilhafte Ausführungsformen sind in den Unteransprüchen gekennzeichnet.

Die Verwendung von Laserdiodenarrays mit einer Vielzahl unabhängiger ansteuerbarer Laserdioden eröffnet die Möglichkeit, auf dem Laserdiodenarray die einzelnen Dioden mit hoher Grundauflösung anzuordnen und durch Ansteuerung von Untermengen der Laserdioden Bilder mit anderen z. B. geringerem Auflösungsgrad zu erzeugen. Damit können z. B. mit ein und derselben Druckeinrichtung alle für den digitalen Druck relevanten Auflösungen erzeugt werden und dies bei hoher Prozeßgeschwindigkeit.

Von Vorteil ist es weiterhin, daß das erfindungsgemäße Prinzip die Verwendung von Polygon-Drehspiegeleinheiten als Ablenkeinheiten ermöglicht, die mit niederer Drehzahl arbeiten. Damit wird der mechanische Gesamtaufbau des Ablenkmoduls, insbesondere im Hinblick auf die Vibrationsanfälligkeit vereinfacht und es können kostengünstige Antriebsmotoren mit geringer Leistungsaufnahme und geringeren Anforderungen an die Unwucht eingesetzt werden.

Die Verwendung von sogenannten Vertical Cavity Surface Emitting Laser (VCSEL)-Arrays, die beispielsweise von der Firma BANDGAP, Technology Corporation, Broomfield, USA angeboten werden, und die auch in der US-A-5,073,041 beschrieben sind, gestatten aufgrund ihrer Aufbautechnik eine hohe Teilung (Auflösung) ohne störendes Nebensprechen zu realisieren.

Von besonderem Vorteil ist die Verwendung der Anordnung und des Verfahrens zur Bilderzeugung in einer elektrografischen Druckeinrichtung, bei der der lichtempfindliche Aufzeichnungsträger als Trommel oder bandförmiger Fotoleiter ausgebildet ist. Die Erfindung läßt sich auch zur Zeichenerzeugung im Offset-Druck verwenden, z. B. zur Beschreibung eines lichtempfindlichen Filmes oder dergleichen.

Ausführungsformen der Erfindung sind in den Zeichnungen dargestellt und werden im folgenden beispielsweise näher beschrieben. Es zeigen

Figur 1 eine schematische Darstellung einer elektrografischen Druckeinrichtung mit einem mehrreihigen Laserdiodenarray als Bildquelle,

Figur 2 eine schematische Darstellung eines Laserdiodenarrays, bei dem die Laserdioden in vier Reihen angeordnet sind, bei 2400 dpi Grundauflösung,

Figur 3 eine schematische Darstellung eines Laserdiodenarrays, bei dem die Laserdioden in zwei Reihen angeordnet sind, bei 1200 dpi Grundauflösung und

Figur 4 eine schematische Darstellung eines Blockschaltbildes für die Ansteuerung eines Laserdiodenarrays zur Erzielung unterschiedlicher Auflösungen.

Im folgenden wird die Auflösung in dem in der Druckindustrie üblichen Maß dpi = dots per inch angegeben. Dies entspricht metrisch einem dot per 0.0254 m.

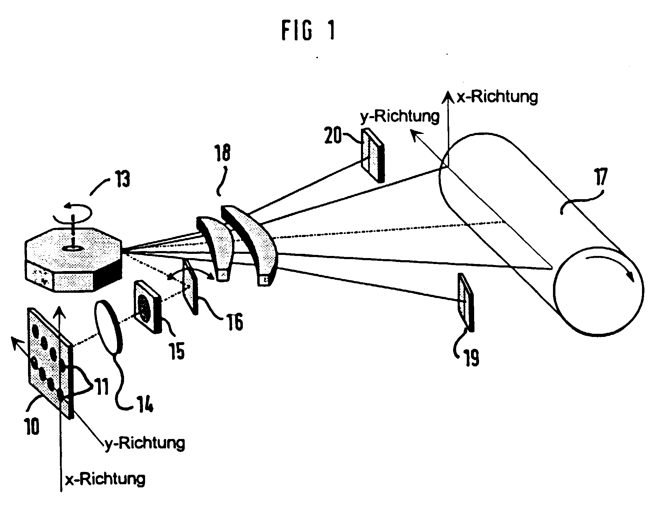

Eine elektrografische Druckeinrichtung deren sonstiger Aufbau z. B in der WO 91/09352 und deren Ansteueranordnung z. B. in der US 4,774,524 beschrieben ist, weist eine in der Figur 1 dargestellte Anordnung zur Erzeugung eines aus einzelnen Bildpunkten zusammengesetzten Rasterbildes auf einem lichtempfindlichen Aufzeichnungträger auf.

Die Anordnung enthält ein Laserdiodenarray 10 als Bildquelle mit einer Vielzahl darauf ein- oder mehrreihig angeordneten, einzeln ansteuerbaren Laserdioden 11 zur Aussendung von Laserstrahlen 12. Das Laserdiodenarray 10 kann als Vertical Cavity Surface Emitting Laserarray ausgebildet sein, wie es z.B. von der Firma BANDGAP, Technology Corporation, Broomfield, USA vertrieben wird. Weiterhin enthält die Anordnung: eine Ablenkeinheit 13 in Form eines elektromotorisch angetriebenen Polygonspiegels; zwischen Laserdiodenarray 10 und Ablenkeinheit 13 eine Kollimationsoptik 14, eine Apertur (Blende) 15 zur Strahlbegrenzung, sowie zwischen Polygonspiegel und einer elektromotorisch angetriebenen Fotoleitertrommel 17 als lichtempfindlichen Aufzeichnungsträger eine Optik 18. Die Optik 18 und die Kollimationsoptik 14 bilden zusammen die sogenannte Scan-Optik. Die Optik 18 hat die Aufgabe, zusammen mit dem Kollimator 14 das Laserdiodenarray 10 auf die Oberfläche des Fotoleiters abzubilden. Bei der Abbildung des Laserdiodenarrays 10 treten zwangsweise optische Verzerrungen in x-Richtung und in y-Richtung auf. Während die Verzerrungen in y-Richtung elektronisch, z. B. durch einen variablen Takt, ausgeglichen werden können, müssen die Verzerrungen in x-Richtung möglichst klein gehalten werden. Es zeigte sich, daß hierfür ein Objektiv mit F· Sin-Korrektur besonders geeignet ist.

Um optische Verzerrungen möglichst klein zu halten, ist ein Abbildungsmaßstab von 1:1 oder kleiner von Vorteil. Hierbei ergibt sich jedoch das Problem, daß nur ein Bruchteil der von den Laserdioden abgestrahlten Lichtenergie in den nachfolgenden Strahlengang eingekoppelt werden kann. Um die Einkoppelung zu optimieren, muß die Brennweite des Kollimators verkürzt bzw. an den Abstrahlwinkel der Laserdioden angepaßt werden. Diese Anpassung führt zu einer Veränderung des Abbildungsmaßstabes, der nach dieser Optimierung bei typisch 4:1 bis 10:1 liegt.

Polygonspiegel können nur mit einer endlichen Genauigkeit bezüglich der Winkellage der Spiegelflächen (Facetten) hergestellt werden. Dies hat zur Folge, daß die abgelenkten Strahlenbündel nach oben oder unten, d. h. in +/- x-Richtung, aus der idealen Ebene herauslaufen. Dieser Fehler wird als Pyramidalfehler bezeichnet. Dieser Pyramidalfehler kann durch einen Kippspiegel 16 kompensiert werden. Hierbei wird der jeweilige Spiegelfehler durch den Kippspiegel 16 vorverzerrt, so daß das Strahlenbündel 12 den Polygonspiegel 13 immer in der exakten Ebene verläßt. Die Spiegelfehler können z. B. einmalig beim Einbau ins Gerät vermessen und abgespeichert werden. Der bevorzugt piezomechanisch angetriebene Kippspiegel 16 erhält sein Stellsignal über einen Zeilenende-Sensor 20. In der Totzeit zwischen Zeilenende und Anfang der nächsten Zeile, gemessen über einen Zeilenanfangs-Sensor 19, wird der entsprechende Stellwert aus dem Speicher, d.h. der Korrekturwert für die nächste Spiegelfläche, auf den piezoelektrischen Antrieb gegeben.

Bei der beschriebenen elektrofotografischen Druckeinrichtung werden im Druckbetrieb auf dem Laserdiodenarray 10 durch Aktivierung entsprechender Einzeldioden 11 Elemente von aus einem Zeichenvorrat eines Zeichengenerators abgerufenen Zeichen in Form von punktförmigen Erregungsmustern nacheinander entsprechend einem Mikrospaltentakt erzeugt, über die Ablenkeinheit 13 abgelenkt und durch die Optik verzerrungsfrei auf der Fotoleitertrommel 17 mikrozeilenweise abgebildet und damit die Fotoleitertrommel 17 zeichenabhängig belichtet. Der im Scanbereich der Ablenkeinheit 13 angeordnete Zeilenanfangsdetektor 19, z. B in Form eines Fotoelementes dient zur Zeilenanfangserkennung. Der Zeilenendedetektor 20 zur Zeilenendeerkennung. Sie liefern einen Zeilenanfangs- und endetakt für die Druckersteuerung. Das so auf dem Fotoleiter erzeugte latente Ladungsbild wird in üblicher Weise über eine Entwicklerstation mit Toner eingefärbt, auf einen z. B. aus Papier bestehenden Aufzeichnungsträger umgedruckt und in einer Fixierstation fixiert.

Die Komponenten der Anordnung werden nun im folgenden näher beschrieben:

Bildquelle

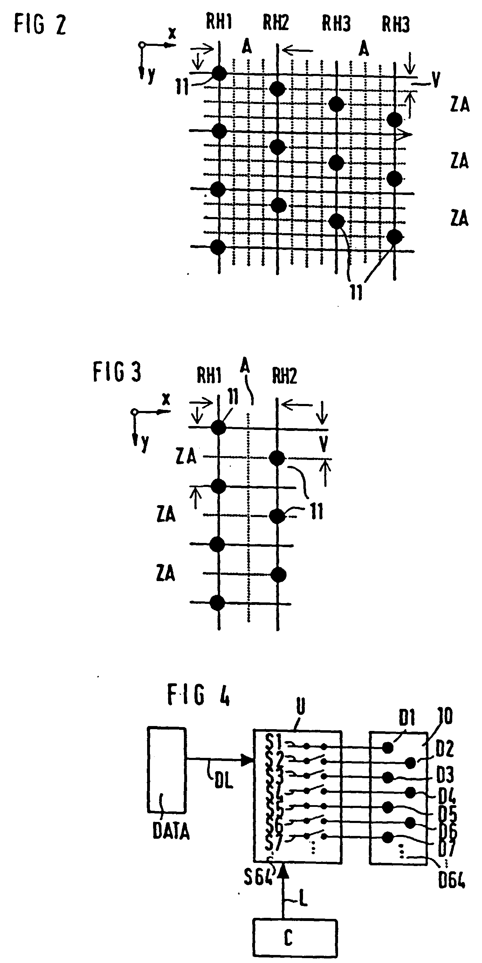

Auf dem als Bildquelle oder Lichtquelle dienenden Laserdiodenarray 10 sind entsprechend der Darstellung der Figuren 2 und 3 die einzelnen Laserdioden 11 in einem Raster angeordnet und zwar in Abhängigkeit von der gewünschten höchsten Auflösung des zu erzeugenden Erregungsmusters bzw. Zeichens. Dieser maximale Auflösungsgrad wird im folgenden als Grundauflösung bezeichnet. Das Laserdiodenarray kann dabei aus einem Chip bestehen, auf dem die Dioden integriert ausgebildet sind oder aus mehreren, z. B. auf einem gemeinsamen Träger zusammengesetzten Einzelchips.

Für eine in der Figur 2 dargestellte Grundauflösung von 2400 dpi mit einer 1:1 Abbildung auf den Fotoleiter weist das Laserdiodenarray beispielsweise 4 x 16 einzeln ansteuerbare Laserdioden 11 auf, die auf dem Träger bzw. Array in 4 Reihen RH1-RH4 von jeweils 16 Dioden in Scanrichtung (Pfeil in X-Richtung) in einem Abstand A nebeneinander angeordnet sind. Die Reihen RH1-RH4 wiederum sind in Y-Richtung versetzt zueinander angeordnet und zwar innerhalb von Matrixzeilenabständen ZA um einen Versatz V.

Der Reihenabstand A (Abszisse) ist abhängig von der möglichen Schaltfrequenz der Dioden und der Scangeschwindigkeit der Ablenkeinheit 13, d. h. vom erzeugten Mikrospaltentakt. Damit wird die Auflösung in X-Richtung im wesentlichen bestimmt durch die Elektronik und die Geschwindigkeit der Ablenkung und nicht durch die Geometrie. Bei einer geforderten Auflösung von 2400 dpi sowohl in X- als auch in Y-Richtung wird günstigerweise der Reihenabstand als ganzzahliger Teil der Grundauflösung gewählt, in diesem Falle 42,6 μm entsprechen 4 x A (600 dpi) = 2400 dpi.

Anders verhält es sich bei der Anordnung der Dioden in Y-Richtung. Durch die verzerrungsfreie Abbildung des Arrays auf den Aufzeichnungsträger entspricht bei einer 1:1 Abbildung die Geometrie des Arrays in Y Richtung exakt der Geometrie der Abbildung. Damit ist bei einer Grundauflösung in Y-Richtung von 2400 dpi der Versatz V entsprechend dem minimalen Mikrozeilenabstand auf dem Aufzeichnungsträger 10,6 μm und damit wird ein als Matrixzeilenabstand bezeichneter Abstand ZA der Matrixzeilen zu ZA = 42,6 μm entsprechend 4 x V = 600 dpi.

Bei der in der Figur 3 dargestellten zweireihigen Diodenanordnung aus 2 x 16 Laserdiodenreihen RH1 und RH2 mit einer Grundauflösung von 1200 dpi beträgt der taktfrequenzabhängige Reihenabstand A der Diodenreihen RH1 und RH2 beispielsweise 42,6 μm (600 dpi) und der Versatz V in Y-Richtung 21,3 μm (1200 dpi) entsprechend 2 x 10,6 μm (Versatz bei 2400 dpi Grundauflösung). Die Matrixstruktur mit Matrixzeilenabstand ZA = 42,6 μm (600 dpi) wird beibehalten.

Der Durchmesser der Dioden 11 (VCSEL-Aufbau) bzw. der Lichtaustrittsfläche (Anodenstruktur) beträgt bei dem dargestellten Beispiel 5 - 15 μm. Er hängt ab von der gewählten Aufbautechnik. Die Zahl der notwendigen Laserdioden 11 je Array ist anwendungsabhängig und liegt typischerweise zwischen 10 und 100. Beispielsweise liegt bei einer geforderten Drehzahl des Polygonspiegels von ca. 10 000 U/min und einer Prozeßgeschwindigkeit von 1 m/s die erforderliche Zahl von Laserdioden je Array bei ca. 60. Aus Ansteuerungsgründen wird man entweder ein einzeiliges Array mit 64 Dioden oder bei Mehrzeiligkeit 2 x 32 oder 4 x 16 Laserdioden wählen.

Ordnet man in der beschriebenen Weise die einzelnen Laserdioden 11 auf dem Laserdiodenarrays 10 mit einer maximalen Grundauflösung von N dpi (beispielsweise 2400 dpi, Figur 2 oder 1200 dpi, Figur 3) ein- oder mehrreihig an und wird die Grundauflösung N dpi [dots per inch] so gewählt, daß sich durch Auswahl jeder zweiten (M = 2) oder dritten (M = 3) oder vierten (M = 4) usw. Laserdiode der Matrix (Reihenfolge in Y-Richtung gesehen) eine Laserdiodenteilmenge mit einer Auflösung von N/M dpi einstellt, so lassen sich beispielsweise bei einer Grundauflösung von 2400 dpi durch entsprechende Ansteuerung der Dioden 11 alle für den digitalen Druck relevanten Auflösungen von 2400/1200/800/600/480/400/300 und 240 dpi realisieren. Wird z. B in der Reihenfolge der Dioden in Y-Richtung der Matrix gesehen (senkrecht zur Scan-Richtung auf dem Aufzeichnungsträger 17) nur jede M = 2 Diode angesteuert, so erhält man eine Auflösung von 1200 dpi. Bei der Ansteuerung von jeder M = 3 Diode eine Auflösung von 800 dpi, bei jeder M = 4 Diode 600 dpi usw. Bei einer Grundauflösung von 1200 dpi können auf diese Weise Auflösungen von 600/400/300 und 240 dpi realisiert werden.

Realisieren läßt sich diese Art der auflösungsabhängigen Ansteuerung mit Hilfe von einer Anordnung, wie sie in der Figur 4 dargestellt ist. Ein Laserdiodenarray 10 mit zwei darauf angeordneten Reihen RH1 und RH2 aus 32 Laserdioden D1-D64 ist mit einer mikroprozessorgesteuerten Umschaltanordnung aus 64, den Dioden D1-D64 zugeordneten. Schaltelementen S1-S64 gekoppelt. Die Umschaltanordung steht einerseits über Signalleitungen L mit dem Controller C der Druckeinrichtung in Verbindung, andererseits über Datenleitungen DL mit einer Datenquelle DATA der Druckeransteuerung. Über den Controller wird die z. B. über eine externe Eingabeeinrichtung ausgewählte Auflösung von 600 dpi bei einer vorgegebenen Grundauflösung von 2400 dpi der Umschalteinrichtung in Form von Signalen zugeführt und damit die Schaltelemente S1-S64 in die dargestellte Schaltstellung gebracht. Im Druckbetrieb wird dann aus der Datenquelle DATA des entsprechenden Datenstromes der abzudruckenden Zeichen mit der gewählten Auflösung über die Umschalteinrichtung U dem Array 10 zugeführt.

Scan-Optik

Das Laserdiodenarray 10 bzw. die Leuchtflächen der einzelnen Laserdioden 11 wird mittels einer geeigneten Scan-Optik zeilenweise auf dem Aufzeichnungsträger (Fotoleiter 17 ) abgebildet, die, wie bereits beschrieben, neben den bekannten Bildfehler korrigierenden Eigenschaften zusätzlich abbildende Eigenschaften durch entsprechenden Linsenschliff besitzt und zwar in der Weise, daß sie das Array 10 entweder im Maßstab 1:1 oder in einem anderen definierten Maßstab z. B. 1:2 bzw. 2:1 bevorzugt zwischen 4:1 und 10:1 usw. auf dem Fotoleiter 17 abbildet.

Neben dem Abbildungsmaßstab spielt auch der erreichbare Fleckdurchmesser der Bildpunkte auf dem Fotoleiter 17 eine wichtige Rolle bei der Rasterbilddarstellung. Gefordert wird eine gewisse Überlappung der Punkte (Lichtverteilung) auf dem Fotoleiter um geschlossene Linien und Flächen drucken zu können. Um dies zu erreichen, sollten die aus den einzelnen Laserdioden 11 austretenden Strahlen 12 einen bestimmten Öffnungswinkel nicht überschreiten, der abhängig ist vom Aufbau des Arrays 10 und auch von der Scan Optik. Bei VCSEL-Arrays liegt der Öffnungswinkel typischerweise bei 8 bis 10 Winkelgraden. Durch Variation des Schichtaufbaues bzw. der Array-Aufbautechnik läßt er sich in Grenzen einstellen. Sollte mit dieser Variationsmöglichkeit der gewünschte Bildpunktdurchmesser auf dem Fotoleiter 10 nicht einstellbar sein, kann mittels einer körperlichen Blende (Apertur 15) die im Strahlengang bevorzugt zwischen Kollimationsoptik 14 und Kippspiegel 16 angeordnet wird, der notwendige Punktdurchmesser eingestellt werden.

Ablenkeinheit

Die Ablenkeinheit 13 ist als elektromotorisch angetriebener Polygondrehspiegel ausgebildet. Bei Verwendung eines Laserdiodenarrays 10 der beschriebenen Art läßt sich die Drehzahl auf unter 14000 U/min bevorzugt unter 10000 U/min halten. Dies gestattet die Verwendung eines einfacheren (z. B. bezüglich Leistungsaufnahme und Unwucht) und damit köstengünstigeren Antriebsmotores als dies bei üblichen Laserdruckern der Fall ist. Außerdem vereinfacht sich der mechanischoptische Gesamtaufbau des Scanmodules, insbesondere hinsichtlich der Vibrationsanfälligkeit.

**Patentansprüche**

1. Anordnung zur Erzeugung eines aus einzelnen Bildpunkten zusammengesetzten Rasterbildes auf einem lichtempfindlichen Aufzeichnungsträger (17), mit

 - einem Laserdiodenarray (10) als Bildquelle mit einer Vielzahl von in einem vorgegebenen Raster darauf angeordneten und zur Bildung eines Erregungsmusters einzeln erregbaren Laserdioden (11),
 - einer Lichtstrahlen des Laserdiodenarrays (10) über die Oberfläche des Aufzeichnungsträgers führenden Ablenkeinheit, (13) und
 - einer zwischen Laserdiodenarray (10) und Aufzeichnungsträger (17) angeordneten Abbildungsoptik, die derart ausgestaltet ist, daß sie das Erregungsmuster der Bildquelle optisch verzerrungsfrei auf dem Aufzeichnungsträger (17) als Bildpunktmuster abbildet, **gekennzeichnet durch** eine mit dem Laserdiodenarray (10) der Bildquelle gekoppelte elektronische Umschaltanordnung (U), die den einzelnen Laserdioden (D1-D64) des Laserdiodenarrays (10) zugeordnete Schaltelemente (S1-S64) aufweist und die einerseits mit einer die Schaltelemente (S1-S64) entsprechend einer gewählten Auflösung auswählenden Steuerung (C) und andererseits mit einer einen Datenstrom liefernden Bilddatenquelle (DATA) in Verbindung steht, wobei im Druckbetrieb aus dem Datenstrom der Bilddatenquelle (DATA) der den abzudruckenden Zeichen mit der über die Steuerung (C) und die Umschaltanordnung (U) ausgewählten Auflösung entsprechende Datenstrom dem Laserdiodenarray (10) zugeführt wird.

2. Anordnung nach Anspruch 1, wobei die einzelnen Laserdioden (11) auf dem Laserdiodenarray (10) entsprechend einer maximalen Grundauflösung von N dpi [dots per inch] ein oder mehrreihig in einer ganzzahligen Folge angeordnet sind, und die Grundauflösung N dpi [dots per inch] so gewählt ist, daß sich durch Auswahl von jeder M-ten mit $M \geq 2$ Laserdiode aus der ganzzahligen Folge eine Laserdiodenteilmenge mit einer Auflösung von N/M dpi [dots per inch] entsprechend einer für die digitale Rasterbilddarstellung relevanten Auflösung einstellt.

3. Anordnung nach einem der Ansprüche 1 oder 2, wobei das Laserdiodenarray (10) als Vertical Cavity Surface Emitting Laserdiodenarray ausgebildet ist.

4. Anordnung nach einem der Ansprüche 1 bis 3, mit einer Ablenkeinheit (13), die einen Polygon-Drehspiegel als Ablenkelement aufweist.

5. Anordnung nach einem der Ansprüche 1 bis 4 mit Mitteln zur Veränderung des Abbildungsmaßstabes des Rasterbildes auf dem Aufzeichnungsträger (17).

6. Anordnung nach einem der Ansprüche 1 bis 5 mit Mitteln (15) zur Veränderung der Bildpunktgröße auf dem Aufzeichnungsträger (17).

7. Anordnung nach Anspruch 6 mit einer im Strahlengang angeordneten optischen Blende (15).

8. Anordnung nach einem der Ansprüche 1 bis 7 mit einem zwischen Laserdiodenarray (10) und Ablenkeinheit angeordneten optischen System mit einer Kollimationsoptik (14), einer Apertur (15) zur Strahlbegrenzung und einer Zylinderlinse (16).

9. Anordnung nach einem der Ansprüche 1 bis 8 mit einem Fotoleiter (17) als Aufzeichnungsträger.

10. Elektrografisches Druck-oder Kopiergerät mit einer Anordnung nach einem der Ansprüche 1 bis 9.

**Claims**

1. An arrangement for generating a matrix image composed of individual image points on a photosensitive recording substrate (17), having

   - a laser diode array (10) as image source with a multiplicity of individually excitable laser diodes (11) arranged thereon in a predetermined grid for forming an excitation pattern,
   - a deflection unit (13) guiding light beams from the laser diode array (10) over the surface of the recording substrate and
   - imaging optics, which are arranged between laser diode array (10) and recording substrate (17) and are configured in such a way that the excitation pattern of the image source is imaged optically and free of distortion on the recording substrate (17) as an image point pattern, characterized by an electronic changeover arrangement (U) which is coupled to the laser diode array (10) of the image source and has switching elements (S1-S64) assigned to the individual laser diodes (D1-D64) of the laser diode array (10) and which is connected on one side to a controller (C) selecting the switching elements (S1-S64) according to a selected resolution and is connected on the other side to an image data source (DATA) supplying a data stream, wherein in printing operation, from the data stream of the image data source (DATA) the data stream corresponding to the characters to be printed with the resolution selected via the controller (C) and the changeover arrangement (U) is fed to the laser diode array (10).

2. The arrangement as claimed in claim 1, wherein the individual laser diodes (11) are arranged on the laser diode array (10) corresponding to a maximum basic resolution of N dpi [dots per inch] in one or more rows in an integer sequence, and the basic resolution N dpi [dots per inch] is selected such that, by selecting each Mth laser diode, with $M \geq 2$, from the integer sequence, a laser diode partial quantity with a resolution of N/M dpi [dots per inch] is established corresponding to a resolution which is relevant for the digital matrix image representation.

3. The arrangement as claimed in either of claims 1 or 2, wherein the laser diode array (10) is designed as a Vertical Cavity Surface Emitting Laser diode array.

4. The arrangement as claimed in one of claims 1 to 3, having a deflection unit (13) which has a polygonal rotary mirror as deflecting element.

**5.** The arrangement as claimed in one of claims 1 to 4, having means for changing the imaging scale of the matrix image on the recording substrate (17).

**6.** The arrangement as claimed in one of claims 1 to 5, having means (15) for changing the size of the image point on the recording substrate (17).

**7.** The arrangement as claimed in claim 6, having an optical diaphragm (15) arranged in the beam path.

**8.** The arrangement as claimed in one of claims 1 to 7, having an optical system which is arranged between laser diode array (10) and deflection unit and has collimation optics (14), an aperture (15) for beam limiting and a cylindrical lens (16).

**9.** The arrangement as claimed in one of claims 1 to 8, having a photoconductor (17) as recording substrate.

**10.** An electrographic printing or copying machine having an arrangement according to one of claims 1 to 9.

## Revendications

**1.** Dispositif pour la génération d'une image matricielle composée de différents points d'image sur un support d'enregistrement (17) photosensible, comprenant :

- un système à diodes laser (10) en tant que source d'images avec une multitude de diodes laser (11) disposées sous forme de trame déterminée sur celui-ci et pouvant être excitées individuellement pour constituer un modèle d'excitation,
- une unité de déflexion (13) balayant la surface du support d'enregistrement avec des rayons lumineux du système à diodes laser (10) et
- une optique de représentation disposée entre le système à diodes laser (10) et le support d'enregistrement (17), agencée pour représenter le modèle d'excitation de la source d'images sur le support d'enregistrement (17) sans distorsion optique sous forme de modèle à points d'image, caractérisé par un dispositif de commutation électronique (U) relié au système à diodes laser (10) de la source d'images, présentant les éléments de commutation (S1 à S64) affectés aux différentes diodes laser (D1 à D64) du système à diodes laser (10), et qui d'une part est en relation avec une commande (C) sélectionnant les éléments de commutation (S1 à S64) en fonction d'une résolution déterminée et d'autre part avec une source de données d'images (DATA) fournissant un courant de données, dans lequel le système à diodes laser (10) est alimenté par le courant de données pendant l'impression avec une résolution sélectionnée par l'intermédiaire de la commande (C) et du dispositif de commutation (U) et dont les signes à imprimer proviennent du courant de données de la source de données d'images (DATA).

**2.** Dispositif selon la revendication 1, dans lequel les différentes diodes laser (11) sont disposées sur le système à diodes laser (10) selon une résolution de base maximale de N dpi (dots per inch) en une ou plusieurs rangées dans une suite à nombres entiers, et la résolution de base N dpi (dots per inch) est choisie de telle sorte qu'en choisissant chaque Mième diode laser, avec $M \geq 2$, dans la suite à nombres entiers, il en résulte une quantité partielle de diodes laser avec une résolution de N/M dpi (dots per inch) en fonction d'une résolution appropriée pour la représentation numérique d'une trame.

**3.** Dispositif selon l'une des revendications 1 ou 2, dans lequel le système à diodes laser (10) est constitué par un système à diodes laser du type « vertical cavity surface emitting ».

**4.** Dispositif selon l'une des revendications 1 à 3, comprenant une unité de déflexion (13) présentant un miroir pivotant polygonal en tant qu'élément de déflexion.

**5.** Dispositif selon l'une des revendications 1 à 4, comprenant des moyens pour modifier l'échelle de représentation de la trame sur le support d'enregistrement (17).

**6.** Dispositif selon l'une des revendications 1 à 5, comprenant des moyens (15) pour modifier la grandeur des points d'image sur le support d'enregistrement (17).

**7.** Dispositif selon la revendication 6, comprenant un écran optique (15) disposé sur le trajet des rayons.

**8.** Dispositif selon l'une des revendications 1 à 7, comprenant un système optique qui comporte un appareil optique collimateur (14), une ouverture (15) pour limiter le rayonnement et une lentille cylindrique (16), et qui est disposé entre le système à diodes laser (10) et l'unité de déflexion.

**9.** Dispositif selon l'une des revendications 1 à 8, comprenant un photoconducteur (17) en tant que support d'enregistrement.

**10.** Appareil d'impression ou de copie électrographique comprenant un dispositif selon l'une des revendications 1 à 9.

## FIG 1

x-Richtung

y-Richtung

20

18

13

17

16

15

11

14

10

19

y-Richtung

x-Richtung

FIG 2

FIG 3

FIG 4